Europäisches Patentamt

European Patent Office

Office européen des brevets

(19)

(11) **EP 0 838 019 B1**

(12) **FASCICULE DE BREVET EUROPEEN**

(45) Date de publication et mention
de la délivrance du brevet:
**24.10.2001 Bulletin 2001/43**

(21) Numéro de dépôt: **97923140.4**

(22) Date de dépôt: **06.05.1997**

(51) Int Cl.⁷: **G01C 21/16**

(86) Numéro de dépôt international:
**PCT/FR97/00801**

(87) Numéro de publication internationale:
**WO 97/43601 (20.11.1997 Gazette 1997/50)**

(54) **CENTRALE INERTIELLE TRIAXIALE A PLUSIEURS TYPES DE GYROMETRES**

DREIACHSIGES INERTIALSYSTEM MIT VERSCHIEDENEN GYROMETERTYPEN

TRIAXIAL INERTIAL NAVIGATION UNIT WITH SEVERAL TYPES OF GYROMETERS

(84) Etats contractants désignés:
**BE ES FR GB GR IT NL**

(30) Priorité: **09.05.1996 FR 9605783**

(43) Date de publication de la demande:
**29.04.1998 Bulletin 1998/18**

(73) Titulaire: **SAGEM S.A.**
**75016 Paris (FR)**

(72) Inventeurs:
• **MAZZANTI, Frédéric**
**F-95610 Eragny sur Oise (FR)**
• **GUEDON, Jean-Yves**
**F-92300 Levallois Perret (FR)**
• **BECHERET, Yves**
**F-75013 Paris (FR)**

(74) Mandataire: **Fort, Jacques**
**CABINET PLASSERAUD**
**84, rue d'Amsterdam**
**75440 Paris Cedex 09 (FR)**

(56) Documents cités:
• **PATENT ABSTRACTS OF JAPAN vol. 018, no. 250 (P-1736), 12 Mai 1994 & JP 06 034372 A (MURATA MFG CO LTD), 8 Février 1994,**
• **IEEE TRANSACTIONS ON ROBOTICS AND AUTOMATION, vol. 11, no. 3, 1 Juin 1995, pages 328-342, XP000511538 BARSHAN B ET AL: "INERTIAL NAVIGATION SYSTEMS FOR MOBILE ROBOTS"**
• **500 YEARS AFTER COLUMBUS - NAVIGATION CHALLENGES OF TOMORROW, MONTEREY, CA., MAR. 23 - 27, 1992, no. -, 1 Janvier 1992, INSTITUTE OF ELECTRICAL AND ELECTRONICS ENGINEERS, pages 46-51, XP000344284 FILMORE J P ET AL: "A UNIQUE SELF-CALIBRATING REDUNDANT INERTIAL SYSTEM"**
• **OPTICAL ENGINEERING, vol. 33, no. 4, 1 Avril 1994, pages 1236-1240, XP000440061 CHIKOVANI V V: "PRECISION DEVICE FOR THREE-AXES ORIENTATION MEASUREMENT EMPLOYING OPTICAL GYROS"**

**Description**

La présente invention concerne les centrales inertielles dites à composants liés, comprenant des gyromètres et des accéléromètres associés à ses circuits de calcul permettant de mesurer de façon autonome l'orientation, les déplacements et la position d'un véhicule porteur dans un trièdre de référence.

Les centrales habituelles de ce type destinées aux avions comportent un gyromètre et un accéléromètre suivant chacun des trois axes d'un trièdre de référence trirectangle (repère dit orthonormé). Ces capteurs sont de même nature suivant les trois axes. Lorsqu'une précision de localisation élevée est nécessaire, les capteurs, et notamment les gyromètres (qui sont actuellement en général des gyromètres laser) sont de coût très élevé.

Dans de nombreux cas, il n'est pas nécessaire d'avoir la même précision de mesure suivant tous les axes. En navigation terrestre par exemple, la mesure de vitesse angulaire autour d'un axe de roulis n'a pas besoin d'être aussi précise qu'autour des autres axes, car la dynamique en roulis est beaucoup plus faible et la valeur moyenne du roulis est nulle. Généralement on place un capteur de moindre précision, mais de même nature que les autres, suivant l'axe où il suffit d'une sensibilité réduite. Cette solution n'apporte qu'un faible gain sur le coût.

La présente invention vise à fournir une centrale inertielle ayant un coût notablement diminué tout en gardant des performances satisfaisantes chaque fois que la dynamique de mouvement angulaire est beaucoup plus faible suivant un axe.

Dans ce but, l'invention propose une centrale inertielle pour un porteur ayant une dynamique de mouvement faible autour d'un premier axe parmi les trois axes de roulis, tangage et lacet, dans laquelle :

deux gyromètres sont placés l'un suivant un deuxième des trois axes et l'autre suivant une direction intermédiaire entre le premier axe et le troisième axe ; et

un gyromètre ayant une précision inférieure de plusieurs ordres de grandeur et un coût très inférieur à ceux des deux autres est placé sensiblement dans le plan défini par le premier et le troisième axes.

On a déjà proposé des centrales inertielles utilisant des gyromètres et accéléromètres disposés suivant des axes non mutuellement orthogonaux, de façon à fournir, en fonctionnement normal, des indications redondantes. La disposition suivant des axes obliques a alors un rôle de redondance nécessitant plus de trois gyromètres. Ce rôle est complètement différent de celui de l'invention.

Les deux gyromètres de précision élevée pourront notamment être des gyrolasers tandis que le gyromètre de précision réduite peut être un gyromètre vibrant, tel que par exemple celui décrit dans le document EP-A-0 578 519 (demande 93 401471.3) dont les performances, comparées à celles d'un gyrolaser précis, sont dans un rapport qui peut atteindre $10^{+5}$. Ce gyromètre peut être également à fibre optique ou gyrolaser mais avec une précision moindre dans un rapport de 100 à 10000 relativement aux gyromètres précis.

Dans le cas d'un véhicule terrestre, le premier axe sera généralement l'axe de roulis ; un gyromètre de précision élevée sera placé suivant l'axe de tangage et un autre gyromètre de précision élevée sera placé dans une orientation intermédiaire entre l'axe de roulis et l'axe de lacet. Le gyromètre de précision réduite sera placé dans le plan roulis-lacet, suivant un axe incliné d'un angle d'au moins 10° par rapport au gyrolaser précis placé dans le même plan.

La centrale comporte également des accéléromètres disposés de façon classique.

La centrale inertielle doit être prévue pour pouvoir se recaler angulairement, alors que le véhicule est à l'arrêt et que ses seuls mouvements angulaires sont ceux dus à la rotation de la terre et aux vibrations, pour trouver la direction du nord géographique et de l'est. Ce recalage s'effectue en mesurant la vitesse autour de l'axe de lacet, qui est égale à la composante verticale de la vitesse de rotation terrestre, théoriquement égale à $\Omega . \sin L$, où $\Omega$ est la vitesse de rotation terrestre et $L$ est la latitude.

Ces observations de variation de cap nul permettent de compenser l'absence d'un troisième gyromètre précis, et d'obtenir, à l'arrêt, une performance de cap quasi-identique à une centrale inertielle classique.

Sur un véhicule terrestre, le gyromètre précis placé entre l'axe de lacet et l'axe de roulis permettra d'évaluer la vitesse de rotation terrestre, avec une précision qui est fonction décroissante de l'angle $\theta$ entre le plan des axes des capteurs de précision et le plan horizontal. Pour atteindre une précision A, exprimée en mrad, sur un véhicule ayant une stabilité en cap à l'arrêt S, exprimée en °/h, il ne faut pas que $\theta$ soit supérieur à :

$$\text{Arc tg}[(\Omega .\cos L).A/S]$$

A la latitude de 50°, où la vitesse $\Omega .\cos L$ est de 10°/h environ, cette condition conduit à limiter $\theta$ à une valeur maximale d'environ 18°, pour les précisions habituellement recherchées sur un véhicule terrestre.

Inversement, en navigation, c'est-à-dire lors des déplacements, la précision est une fonction croissante de $\theta$ : toujours pour les précisions habituelles, et pour un véhicule terrestre, on ne peut pratiquement pas descendre au-dessous de $\theta = 13°$ à la latitude de 50°.

Pour déterminer $\psi$ (angle entre le gyromètre précis et le gyromètre moins précis dans le plan roulis-lacet), on cherche à minimiser l'erreur observable E, qui peut s'écrire, pour une rotation $\omega$ du véhicule suivant l'axe du gyro peu précis ($\omega$ dépendant plus ou moins de $\psi$ suivant le type de porteur) :

où :

$k_0$ est le biais du gyromètre de faible performance (gyro

$$E = \frac{k_0}{\sin\psi} + k_1\,\frac{\omega(\Psi)}{\sin\psi} + k_2 + \frac{\omega(\psi+\frac{\pi}{2})}{\sin\psi}$$

vibrant),
$k_1$ est la dérive du facteur d'échelle du gyromètre,
$k_2$ est l'erreur de calage de l'axe sensible du gyro de faible précision,
ω est une somme de rotations, notamment parasites à l'arrêt,
(ψ + π/2) est la rotation ressentie suivant un axe perpendiculaire à l'axe du gyro de faible précision dans le plan des axes roulis-lacet.

L'erreur E est minimisée pour chaque application (terrestre, aérienne), en optimisant ψ, à partir des valeurs de ω que l'on rencontrera sur le porteur.
La centrale est avantageusement munie de moyens de mesure de parcours ou de vitesse destinés à fournir une aide supplémentaire aux moyens de calcul de position en complétant les indications fournies par les composants inertiels.
Un véhicule, automobile par exemple, peut comporter un odomètre (compteur kilométrique). Sur un avion commercial, qui maintient le même cap pendant de longues périodes de temps et dont l'axe de moindre dynamique est l'axe de lacet, une mesure complémentaire (par exemple de la vitesse par rapport à l'air, ou Doppler) permet de réduire les erreurs.
L'invention sera mieux comprise à la lecture de la description qui suit de modes particuliers de réalisation de l'invention, donnés à titre d'exemples non limitatifs. La description se réfère aux dessins qui l'accompagnent, dans lesquels :

- la figure 1 est un diagramme destiné à montrer les notations utilisées dans la description ;
- la figure 2 est un diagramme montrant la variation des erreurs quadratiques (rms) d'alignement en cap en fonction de l'angle θ, pour plusieurs valeurs de roulis ; et
- la figure 3 est un organigramme fonctionnel de principe de la centrale.

On ne décrira pas la constitution matérielle des composants de la centrale, qui peut être classique. En particulier, les gyromètres de précision élevée peuvent être des gyrolasers de type varié. On supposera que le gyromètre de performances réduites est un gyromètre vibrant. Les accéléromètres ont généralement une précision de mesure de $10^{-3}$g à $10^{-5}$g (g étant l'accélération de la pesanteur).
On décrira maintenant une centrale utilisable sur un véhicule automobile, où l'axe de moindre dynamique est l'axe de roulis.

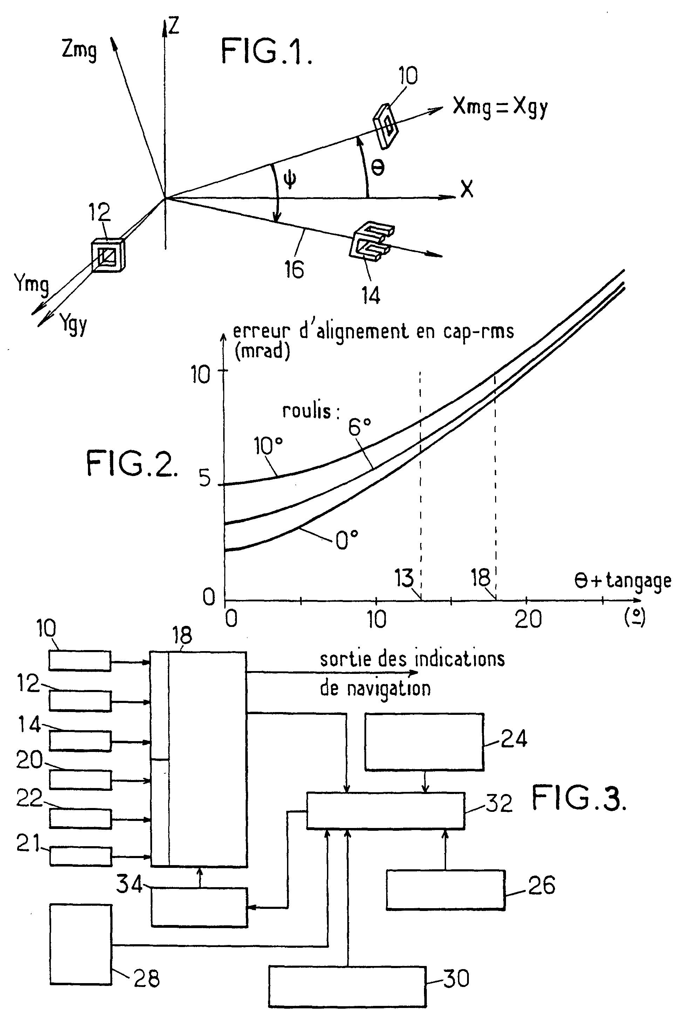

Les notations utilisées, représentées en figure 1, sont les suivantes :

X, Y et Z :  axes de roulis, de tangage et de lacet du véhicule
Xgy :  axe du gyrolaser 10 proche de l'axe de roulis X (horizontal en position nominale du véhicule à l'arrêt),
Ygy :  axe du gyrolaser 12 placé suivant l'axe de tangage Y.

Trièdre analytique orthonormé Ymg, Ymg, Zmg, lié aux gyrolasers :

Xmg :  identique à Xgy par définition ;
Ymg :  orthogonal à Xmg et dans le plan Xgy, Ygy (Ymg ne diffère de Ygy que d'un angle de calage faible) ;
Zmg :  orthogonal à Xmg et Ymg.

Ymg et Ygy sont en principe confondus, mais en fait ils diffèrent d'un angle de calage qui est faible et que l'on peut mesurer au cours d'un calibrage et prendre en compte dans les calculs.

θ :  angle entre Xgy et X,
ψ :  angle entre Xmg et l'axe 16 du gyromètre vibrant 14, (perpendiculaire à Ymg aux erreurs de calage près).

Le choix des angles θ et ψ résulte d'un compromis entre des exigences dans une certaine mesure contradictoires, portant sur :

- la précision de la détermination du cap à l'arrêt (initialisation de la centrale par recherche du nord géographique),
- la précision de la mesure de position lors des déplacements (navigation dans un repère géographique).

En général, afin de conserver des performances d'alignement en cap, on choisira un angle θ inférieur à 45° en valeur absolue. Le gyromètre précis incliné conserve ainsi une précision de la mesure de la rotation terrestre horizontale suffisante.
La figure 2 montre, dans le cas d'un véhicule terrestre situé à 50° de latitude, l'erreur moyenne commise sur l'orientation des gyromètres en fonction de θ, sur un véhicule à l'arrêt avec un roulis accidentel ne dépassant pas 10°.
Dans la réalisation effectuée, on constate que, pour ne pas dépasser une erreur moyenne de 9 mrad, θ augmenté du tangage pendant la phase d'alignement ne doit pas dépasser 18°.
Mais il n'est pas possible de réduire θ largement au-dessous de cette valeur, car l'erreur de navigation devient excessive : pratiquement on ne peut descendre au-dessous de 10°. Toutefois, pour certaines applications où par exemple la navigation n'est pas requise (centrales destinées uniquement à l'orientation à l'arrêt), on peut aller jusqu'à θ = 0.

Dans l'application envisagée, une valeur de 13° a été choisie en supposant des tangages moyens inférieurs à 5°.

L'organigramme fonctionnel de la centrale peut être celui montré en figure 3. La constitution interne des composants ne sera pas décrite car ces composants peuvent être de type connu.

La centrale comporte un calculateur de navigation inertielle 18 qui peut être de type classique. Il reçoit les signaux de sortie des gyromètres précis 10 et 12 (gyromètres laser carrés par exemple) et du gyromètre de précision réduite 14. Il reçoit également les signaux de sortie d'au moins deux accéléromètres 20 et 22, habituellement de classe $10^{-4}$g à $10^{-3}$g dans le cas d'un véhicule terrestre. Un troisième accéléromètre éventuel est placé suivant l'axe Z. Ces accéléromètres sont placés suivant trois axes orthogonaux, dont deux proches du plan horizontal lorsque le véhicule est à l'arrêt en position nominale.

Dans des mémoires 24 et 26 sont respectivement stockés un modèle dynamique du véhicule à l'arrêt et un modèle des différents capteurs, permettant de prendre en compte leur emplacement exact et leurs erreurs systématiques. Les résultats à charger dans ces mémoires peuvent être déterminés par un calibrage préalable.

Les paramètres d'entrée de la centrale comportent également des informations auxiliaires fournies par exemple, dans le cas d'un véhicule terrestre, par un compteur de distance parcourue 28. Dans le cas d'un aéronef, l'information auxiliaire peut être la vitesse sol, mesurée par effet Doppler. Un organe supplémentaire 30 de détection d'arrêt, autorisant la recherche de nord géographique, est prévu. Cet organe 30 peut par exemple émettre un signal lorsque le train d'atterrissage est sorti et que le frein est serré.

Un filtre numérique 32 (filtre de Kalman en général) reçoit les informations stockées dans les mémoires et les informations auxiliaires, et fournit à une mémoire de paramètres corrigés 34 les paramètres qui permettent au calculateur 18 d'élaborer les indications de positions géographique et angulaires, et les indications de vitesse requises pour la navigation.

La mise en oeuvre de la centrale est proche de celle d'une centrale inertielle classique. Le véhicule étant immobile, la recherche de nord ne requiert que quelques minutes une fois la latitude et la longitude affichées. Elle utilise les observations de vitesse nulle et de variation de lacet nulle.

## Revendications

**1.** Centrale inertielle à composants liés pour véhicule ayant une dynamique de mouvement angulaire réduite autour d'un premier axe parmi les trois axes de roulis, tangage et lacet du véhicule, comprenant trois gyromètres,

**caractérisée en ce que** :

deux des gyromètres (10) sont placés l'un suivant un deuxième des trois axes (Ygy) et l'autre suivant une direction (Xgy) intermédiaire entre le premier axe et le troisième axe ; et le troisième gyromètre (14), ayant une précision inférieure de plusieurs ordres de grandeur et un coût très inférieur à ceux des deux autres, est placé sensiblement dans le plan défini par le premier et le troisième axes (X, Z).

**2.** Centrale selon la revendication 1, **caractérisée en ce que** les deux premiers gyromètres sont des gyrolasers tandis que le troisième gyromètre est un gyromètre vibrant.

**3.** Centrale selon la revendication 1 ou 2, pour véhicule terrestre, **caractérisée en ce que** le premier axe est l'axe de roulis du véhicule, un des gyromètres de précision élevée est placé suivant l'axe de tangage et l'autre gyromètre de précision élevée est placé dans une orientation intermédiaire entre l'axe de roulis et l'axe de lacet.

**4.** Centrale selon la revendication 3, **caractérisée en ce que** le troisième gyromètre (14) est placé suivant un axe (16) incliné par rapport à l'axe de roulis (X).

**5.** Centrale selon la la revendication 3 ou 4, **caractérisée en ce que** l'angle (θ) entre l'axe de roulis et ledit autre gyromètre de précision élevée (10) est au plus égal à

$$\theta_{MAX} = \text{Arc tg } [(\Omega.\cos L).A/S]$$

où A est la précision recherchée sur la détermination de l'orientation à l'arrêt, S est la stabilité en cap à l'arrêt du véhicule, Ω est la vitesse angulaire de rotation de la terre et L est la latitude.

**6.** Centrale selon la revendication 5, **caractérisée en ce que** l'angle (θ) est compris entre 0 et 18°.

**7.** Centrale selon l'une quelconque des revendications 3 à 6, **caractérisée en ce qu'**elle comporte deux accéléromètres de mesure suivant des axes situés dans un plan horizontal à l'arrêt du véhicule et un compteur de parcours.

**8.** Centrale selon la revendication 1 ou 2 pour avion, **caractérisée en ce que** le premier axe est l'axe de lacet, et **en ce qu'**un des gyromètres de précision élevée est placé suivant l'axe de tangage et l'autre gyromètre de précision élevée dans une orientation intermédiaire entre l'axe de roulis et l'axe de lacet.

9. Centrale selon la revendication 3 ou 8, **caractérisée en ce qu'**elle comporte des moyens de détermination de cap à l'arrêt, comprenant lesdits autres gyromètres (10 et 12) et des moyens prenant en compte les variations de cap, en les supposant nulles.

## Claims

1. A strapdown inertia unit for a vehicle having a smaller dynamic range of angular motion about a first axis selected from the roll axis, the pitch axis, and the yaw axis of the vehicle, the unit including three gyros and being **characterized in that**:

   two of the gyros (10) are placed, with one on a second of the three axes (Ygy) and the other on a direction (Xgy) intermediate between the first axis and the third axis; and
   the third gyro (14), having a precision that is several orders of magnitude less than that of the other two gyros and a much lower cost, is placed substantially in the plane defined by the first and third axes (X, Z).

2. A unit according to claim 1, **characterized in that** the first two gyros are laser gyros while the third gyro is a vibrating gyro.

3. A unit according to claim 1 or 2, for a land vehicle, **characterized in that** the first axis is the roll axis of the vehicle, one of the high-precision gyros is placed on the pitch axis and the other high-precision gyro is placed on an orientation intermediate between the roll axis and the yaw axis.

4. A unit according to claim 3, **characterized in that** the third gyro (14) is placed on an axis (16) that is inclined relative to the roll axis (X).

5. A unit according to claim 3 or 4, **characterized in that** the angle ($\theta$) between the roll axis and said other high-precision gyro (10) is not greater than

$$\theta_{MAX} = \arctan[(\Omega.\cos L).A/S]$$

   where A is the desired precision on determining orientation when stationary, S is the stability of heading when the vehicle is stationary, $\Omega$ is the angular speed of rotation of the earth, and L is latitude.

6. A unit according to claim 5, **characterized in that** the angle ($\theta$) lies in the range 0° to 18°.

7. A unit according to any one of claims 3 to 6, **characterized in that** it includes two accelerometers performing measurements along axes situated in a plane that is horizontal when the vehicle is at rest, and a distance-travelled meter.

8. A unit according to claim 1 or 2 for an aircraft, **characterized in that** the first axis is the yaw axis, and **in that** one of the high-precision gyros is placed on the pitch axis and the other high-precision gyro is placed on an orientation intermediate between the roll axis and the yaw axis.

9. A unit according to claim 3 or 8, **characterized in that** it includes means for determining heading when stationary, comprising said other gyros (10 and 12) and means for taking variations of heading into account, assuming them to be zero.

## Patentansprüche

1. Inertialsystem mit verbundenen Komponenten für ein Fahrzeug mit einer verminderten Winkelbewegungsdynamik in einer ersten von drei Achsen, die von der Rollachse, der Nickachse und der Gierachse des Fahrzeugs gebildet werden, mit drei Kreiseln,
   **dadurch gekennzeichnet, dass**

   von zweien der Kreisel (10) der eine in einer zweiten (Ygy) der drei Achsen und der andere in einer Zwischenrichtung (Xgy) zwischen der ersten und der dritten Achse angeordnet ist und der dritte Kreisel (14), der eine um mehrere Größenordnungen niedrigere Genauigkeit besitzt und dessen Kosten wesentlich niedriger als die der beiden anderen sind, im wesentlichen in der Ebene angeordnet ist, die durch die erste und die dritte Achse (X, Z) bestimmt wird.

2. System nach Anspruch 1, **dadurch gekennzeichnet, dass** die beiden ersten Kreisel Laserkreisel sind, während der dritte Kreisel ein Schwingkreisel ist.

3. System nach Anspruch 1 oder 2 für ein Landfahrzeug, **dadurch gekennzeichnet, dass** die erste Achse die Rollachse des Fahrzeugs ist, einer der Kreisel hoher Genauigkeit in der Nickachse angeordnet ist und der andere Kreisel hoher Genauigkeit in einer Zwischenrichtung zwischen der Rollachse und der Gierachse angeordnet ist.

4. System nach Anspruch 3, **dadurch gekennzeichnet, dass** der dritte Kreisel (14) in einer Achse (16) angeordnet ist, die gegen die Rollachse (X) geneigt ist.

5. System nach Anspruch 3 oder 4, **dadurch gekennzeichnet, dass** der Winkel (θ) zwischen der Rollachse und dem anderen Kreisel (10) hoher Präzision höchstens gleich

$$\theta_{MAX} = arc\ tg\ [(\Omega.\cos L)\ .A/S]$$

ist, worin A die gewünschte Genauigkeit bei der Bestimmung der Ausrichtung bei Stillstand ist, S die Kursstabilität bei Stillstand des Fahrzeugs, Ω die Drehwinkelgeschwindigkeit der Erde und L die geographische Breite ist.

6. System nach Anspruch 5, **dadurch gekennzeichnet, dass** der Winkel (θ) zwischen 0 und 18° beträgt.

7. System nach einem der Ansprüche 3 bis 6, **dadurch gekennzeichnet, dass** es zwei Beschleunigungsmesser in Achsen, die bei Stillstand des Fahrzeugs in einer horizontalen Ebene liegen, und einen Fahrstreckenzähler aufweist.

8. System nach Anspruch 1 oder 2 für ein Flugzeug, **dadurch gekennzeichnet, dass** die erste Achse die Gierachse ist und dass einer der Kreisel hoher Genauigkeit in der Nickachse angeordnet ist und der andere Kreisel hoher Genauigkeit in einer Zwischenrichtung zwischen der Rollachse und der Gierachse angeordnet ist.

9. System nach Anspruch 3 oder 8, **dadurch gekennzeichnet, dass** es Mittel zur Kursbestimmung bei Stillstand aufweist, die diese anderen Kreisel (10 und 12) und Mittel umfassen, die die Kursänderungen berücksichtigen, indem sie sie mit null annehmen.

## FIG.1.

Zmg

Z

Xmg = Xgy

10

ψ

Θ

X

12

16

14

Ymg

Ygy

## FIG.2.

erreur d'alignement en cap-rms (mrad)

10

roulis :

6°

10°

5

0°

13

18

Θ + tangage

0

10

20

(°)

## FIG.3.

10

18

sortie des indications de navigation

12

14

24

20

22

21

32

34

26

28

30